Europäisches Patentamt

European Patent Office

Office européen des brevets

(19)

(11) Veröffentlichungsnummer : **0 364 669 B1**

(12) # EUROPÄISCHE PATENTSCHRIFT

(45) Veröffentlichungstag der Patentschrift :
**23.09.92 Patentblatt 92/39**

(51) Int. Cl.$^5$ : **G01B 21/04, G01K 1/14**

(21) Anmeldenummer : **89112055.2**

(22) Anmeldetag : **01.07.89**

(54) **Verfahren zur Erfassung der Temperatur von Messobjekten auf Koordinatenmessgeräten.**

(30) Priorität : **09.07.88 DE 3823373**

(43) Veröffentlichungstag der Anmeldung :
**25.04.90 Patentblatt 90/17**

(45) Bekanntmachung des Hinweises auf die
Patenterteilung :
**23.09.92 Patentblatt 92/39**

(84) Benannte Vertragsstaaten :
**DE FR GB IT SE**

(56) Entgegenhaltungen :
**EP-A- 0 128 464**
**WO-A-87/01798**
**DE-B- 1 015 614**
**DE-C- 3 013 378**

(73) Patentinhaber : **Firma Carl Zeiss**
**W-7920 Heidenheim (Brenz) (DE)**
(84) **DE FR IT SE**
Patentinhaber : **CARL ZEISS-STIFTUNG**
**HANDELND ALS CARL ZEISS**
**W-7920 Heidenheim (Brenz) (DE)**
(84) **GB**

(72) Erfinder : **Tittl, Jakob**
**Bergstrasse 52**
**W-7927 Sontheim/Brenz (DE)**

## Beschreibung

Die Erfindung betrifft ein Verfahren und einen Temperatursensor zur Erfassung der Temperatur von Meßobjekten auf Koordinatenmeßgeräten.

In der Koordinatenmeßtechnik ist es für genaue Längenmessungen erforderlich, die Temperatur des mit dem Koordinatenmeßgerät zu vermessenden Werkstücks, bzw. Meßobjekts auf etwa 0,1 K zu kennen. Be-kannte, berührungslos arbeitende Temperatursensoren sind bisher nicht in der Lage, Temperaturen mit dieser Genauigkeit zu erfassen. Zur Temperaturerfassung werden daher bisher von der Bedienperson des Koordinatenmeßgerätes Kontaktthermometer an das Meßobjekt angelegt. Hierbei handelt es sich um Präzisionswiderstände, die an eine Auswerteschaltung des Koordinatenmeßgerätes angeschlossen sind. Ihre Meßwerte werden zusammen mit den Meßwerten weiterer, an den Maßstäben des Koordinatenmeßgerätes fest installierter Kontaktthermometer dazu verwendet, das beispielsweise in der DE-A1-36 20 118 beschriebene Verfahren zur Korrektur der Längenmeßwerte des Werkstücks auf die für eine Bezugstemperatur von 20° C geltenden Abmessungen durchzuführen.

Die bekannte Methode der Temperaturerfassung erfordert also die Anwesenheit einer Bedienperson, die das Kontaktthermometer an das Werkstück, bzw. Meßobjekt anlegt. Nun werden Koordinatenmeßgeräte zunehmend im Serienmeßbetrieb eingesetzt um z.B. in einer mannlosen Nachtschicht ohne Betreuung durch Bedienpersonal CNC-gesteuert eine größere Anzahl auf dem Meßtisch aufgespannter oder kontinuierlich über ein Handhabungssystem zugeführter Werkstücke zu vermessen. Hier kann die Temperaturkompensation der Koordinatenmeßwerte nicht laufend während der Schicht erfolgen, da die Temperatur nur einmal vor Beginn der Schicht gemessen wird. Wenn die Temperatur der zu vermessenden Werkstücke sich während der Schicht ändert, führt das unweigerlich zu Meßfehlern.

Aus der vorstehend genannten DE-A1-36 20 118 ist es außerdem bekannt, für Werkstücke, die innerhalb eines flexiblen Fertigungssystems vermessen werden, die Temperaturerfassung dadurch zu automatisieren, daß auf der Werkstückpalette ein Referenzkörper (Endmaß) installiert wird. Dieses Endmaß durchläuft die Fertigungsprozesse gemeinsam mit dem Werkstück und nimmt dabei die gleiche Temperatur an. Das Koordinatenmeßgerät ermittelt dann die Temperatur des zu vermessenden Werkstücks über eine Längenmessung an diesem Referenzkörper.

Diese Methode der Temperaturerfassung ist zwar für Werkstücke im Fertigungsbereich geeignet, besitzt jedoch Nachteile im Serienmeßbetrieb. Denn da nicht die Temperatur am Werkstück selbst direkt gemessen wird, können Fehlereinflüsse aufgrund von Temperaturgradienten im Meßvolumen des Koordinatenmeßgerätes, bzw. innerhalb des Werkstücks selbst nicht erfaßt werden.

Aus der DE-C2-30 13 378 ist außerdem ein Verfahren bekannt, bei dem Werkstücke automatisch einer mit einem Temperaturfühler versehenen Meßeinrichtung zugeführt und hinsichtlich ihrer räumlichen Abmessungen und ihrer Temperatur ausgemessen werden. Das bekannte Verfahren ist jedoch schlecht geeignet, wenn Werkstücke mit unterschiedlicher Geometrie automatisch gemessen werden sollen. Denn dann ist ein aufwendiges Handhabungssystem erforderlich, um den Temperatursensor mit dem Werkstück in Kontakt zu bringen.

Es ist die Aufgabe der vorliegenden Erfindung ein Verfahren zur Erfassung der Temperatur von Meßobjekten auf Koordinatenmeßgeräten zu schaffen, das einen automatischen Betrieb ohne Bedienpersonal zuläßt und mit möglichst geringem Aufwand eine sichere und genaue Erfassung der Meßwerte ermöglicht.

Diese Aufgabe wird bei einem Verfahren der eingangs genannten Art durch die im Kennzeichen des Anspruchs 1 angegebene Maßnahmen gelöst. Ein für diesen Zweck geeigneter Temperatursensor ist durch die Merkmale des Anspruchs 4 charakterisiert.

Damit mit dem Temperatursensor auch gegenüber den Maschinenachsen geneigte Werkstückflächen sicher kontaktiert werden können, ist der Sensor mit seiner Kontaktfläche federnd an der Halterung befestigt, die ihn mit dem Koordinatenmeßgerät verbindet. Außerdem ist der Sensor gelenkig an der Halterung befestigt. Der Sensor kann dann in Bezug auf die zu kontaktierende Seite des Werkstücks vorausgerichtet werden.

Gemäß der Erfindung wird der Sensor zur Erfassung der Werkstücktemperatur weder von einer Bedienperson noch von einem aufwendigen, zusätzlichen Handhabungssystem, sondern vom Meßarm des Koordinatenmeßgerätes selbst mit dem Werkstück in Kontakt gebracht. Dies geschieht dadurch, daß der für die Koordinatenmessung normalerweise benutzte Taststift oder der gesamte Tastkopf gegen einen Temperatursensor ausgewechselt wird. Das Verfahren setzt deshalb zum einen die Verwendung eines Koordinatenmeßgerätes voraus, welches eine automatische Tasterwechseleinrichtung besitzt und erfordert zum anderen, daß der anstelle des Tasters bereitgehaltene Temperatursensor mit einer Halterung versehen ist, die in ihrer Form der Halterung entspricht, den die auswechselbaren Koordinatenmeßtaster besitzen.

Koordinatenmeßgeräte mit automatischer Tasterwechseleinrichtung sind an sich bekannt und beispielsweise in der Produktinformation 60-20-027-d der Anmelderin mit dem Titel "Tasterwechseleinrichtungen", Druckvermerk ZS X/84, der EP-A1 01 28 464 sowie der WO-A-87/01798 beschrieben. Derartige Wechseleinrichtungen sehen ein Magazin im Meßvolumen des Koordinatenmeßgerätes vor, in dem die verschiedenen auswechselbaren Tastelemente abgelegt sind. Der für eine automatische Temperaturmessung mit einem solchen System nötige Zusatzaufwand besteht also lediglich darin, einen Temperatursensor mit entsprechender Aufnahme in dieses Magazin einzuhängen und die entsprechenden Wechselvorgänge und Antastvorgänge mit dem Temperatursensor in das Steuerprogramm für das Koordinatenmeßgerät zu integrieren.

Vorteilhafte Ausgestaltungen der Erfindung sind den abhängigen Ansprüchen entnehmbar.

Nachfolgend sind Ausführungsbeispiele anhand der Figuren 1-4 der beigefügten Zeichnungen beschrieben.

Fig. 1 ist eine perspektivische Skizze eines Teils des Magazins, in dem ein Koordinatenmeßtaster und ein Temperatursensor bereitgehalten werden,

Fig. 2 zeigt den Temperatursensor aus Fig. 1 in Seitenansicht,

Fig. 3a ist die Seitenansicht eines gegenüber Fig. 2 leicht modifizierten Ausführungsbeispiels für den Temperatursensor,

Fig. 3b zeigt die Halterung des Temperatursensors aus Fig. 3a in Aufsicht,

Fig. 4 ist eine perspektivische Darstellung eines kompletten Koordinatenmeßgerätes mit eingewechseltem Temperatursensor gemäß einem dritten Ausführungsbeispiel.

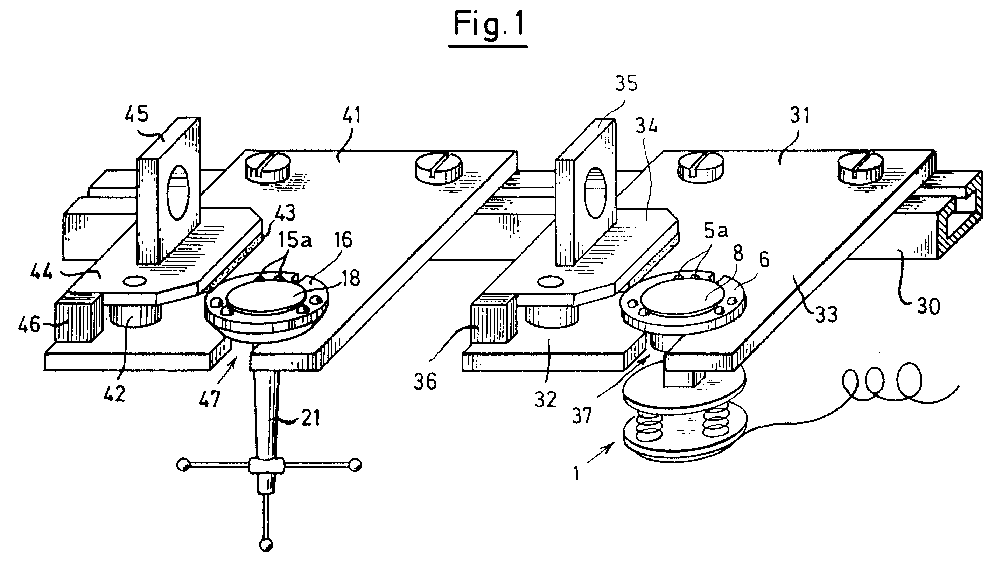

Das in Fig. 1 dargestellte Magazin entspricht in seinem Aufbau dem Magazin der in der EP-A1- 01 28 464 beschriebenen Tasterwechseleinrichtung. Das Magazin ist dort in seinen Einzelheiten beschrieben.

In einem der dort dargestellten zwei Magazinplätze, nämlich in dem Magazinplatz (47) ist eine auswechselbare Taststiftkombination (21) eingehängt. Diese Taststiftkombination (21) besitzt eine Halterung (16) in Form eines Drehteils (16), in das ein von drei Kugelpaaren (15a) gebildetes Dreipunktlager eingelassen ist. Mit diesen Kugeln legt sich die Taststiftkombination (21) an das entsprechende Gegenlager im Tastkopf des Koordinatenmeßgerätes an. Eine in das Drehteil (16) eingelassene Stahlplatte (18) dient als Anker für die im Tastkopf befindliche elektromagnetische Spanneinrichtung.

In den zweiten, mit (37) bezeichneten Magazinplatz ist ein Temperatursensor (1) eingehängt. Dieser Temperatursensor (1) besitzt die gleiche Halterung (6) wie die Taststiftkombination (21). Die Lagerkugeln sind dort mit (5a) und die Stahlplatte mit (8) bezeichnet.

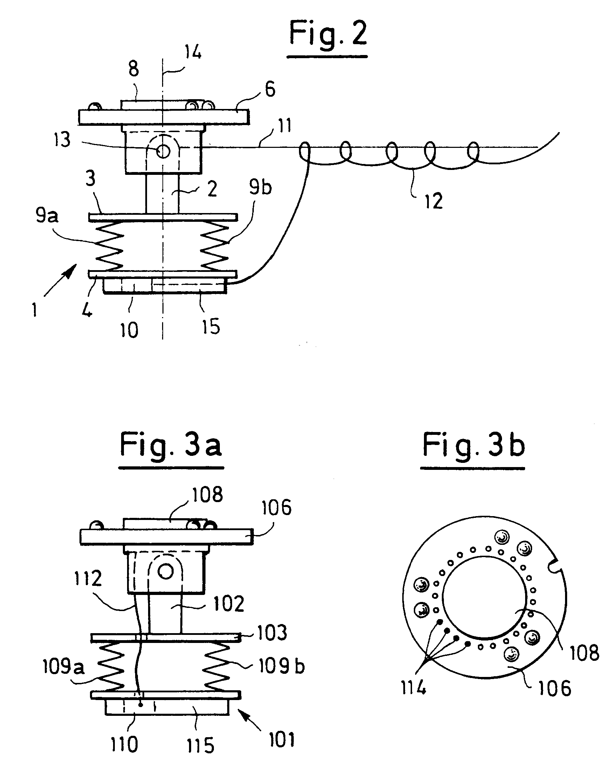

Wie aus der Seitenansicht nach Fig. 2 hervorgeht, ist das eigentliche Meßelement (10) des Temperatursensors in eine Kontaktplatte (15) eingebettet.

Diese Kontaktplatte stellt den Wärmeübergang vom Werkstück auf den Sensor selbst sicher und besitzt daher eine gute Wärmeleitfähigkeit und eine geringe Wärmekapazität. Für diesen Zweck kann beispielsweise eine dünne Kupferscheibe dienen, die außen versilbert ist, um Temperaturstrahlung aus der Umgebung vom Meßelement fernzuhalten, und über eine isolierende Zwischenschicht an einer ersten Halteplatte (4) befestigt ist. Das eigentliche Meßelement (10) selbst kann beispielsweise ein Temperaturfühler PT 100 (Platinwiderstand) sein wie er von der Fa Degussa, Frankfurt unter der Bezeichnung GR 2102 vertrieben wird.

Die erste Halteplatte (4) ist mit Hilfe von vier Federn (9a, 9b) an einer zweiten Halteplatte (3) angebunden. Diese federnde Anbindung stellt sicher, daß die Kontaktplatte (15) auch an nicht exakt achsparallele Flächen des zu vermessenden Werkstücks angelegt werden kann.

Die zweite Halteplatte (3) ist ihrerseits über ein Gelenk (2) um die Achse (14) drehbar und um die Achse (13) schwenkbar an der Halterung (6) befestigt. Die Kontaktplatte (15) kann somit grob in Bezug auf die Geometrie der zu vermessenden Werkstücke vorausgerichtet werden.

Das Anschlußkabel (12) des Meßelementes (10) ist zur Zugentlastung mehrfach um einen an der Halterung (6) befestigten Draht (11) herumgeschlungen und mit einer entsprechenden Elektronik zur Temperaturmessung am hier weiter nicht dargestellten Koordinatenmeßgerät verbunden.

Zur Weiterleitung der Signale des Meßelementes (10) kann jedoch auch die in Fig. 3a/3b skizzierte Lösung verwendet werden:

In dem dort dargestellten Ausführungsbeispiel sind auf der Seite der Wechselfläche der Halterung (106) mehrere Kontaktstifte angebracht. Die Anschlußkabel (112) des Meßelements (110) sind beispielsweise mit den Kontaktstiften (114) verbunden. Diese leiten die Meßsignale an entsprechende Gegenkontakte an der Aufnahme am Meßarm des Koordinatenmeßgerätes weiter. Die hier beschriebene Lösung eignet sich insbesondere für den Fall, daß das Koordinatenmeßgerät nicht mit einer Wechseleinrichtung für Taststifte, sondern mit einer Wechseleinrichtung für komplette Tastköpfe ausgerüstet ist, die ohnehin Anschlüsse für Versorgungsspannung, Tastsignalweiterleitung, etc. benötigen.

Neben den hier dargestellten Möglichkeiten der direkten Weiterleitung des Meßsignals des Temperatursensors über Kabel ist es außerdem möglich, das Signal der Meßelemente drahtlos an das Koordinatenmeßgerät weiterzuleiten. In diesem Falle enthält der Temperatursensor eine eigene Spannungsversorgung (Batterie) sowie einen zur Meßwertübertragung geeigneten Sender.

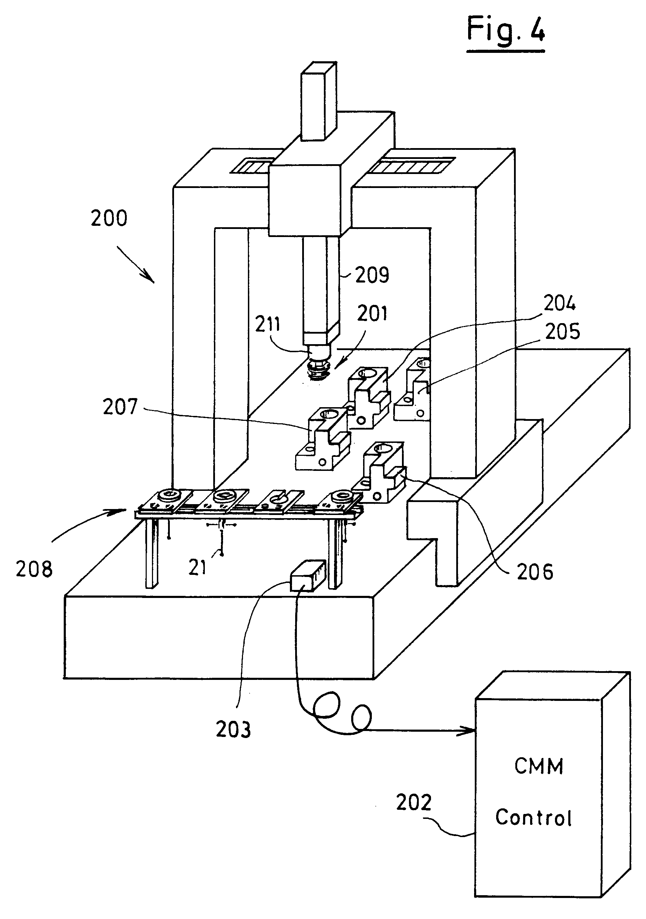

Mit einem solchen Temperatursensor wird nachfolgend der Vorgang der Temperaturerfassung anhand der Skizze nach Fig. 4 erläutert:

Das in Fig. 4 dargestellte Koordinatenmeßgerät (200) besitzt innerhalb seines Meßvolumens ein Magazin (208), in dem mehrere auswechselbare Taststifte sowie ein Temperatursensor (201) bereitgehalten werden. Wenn eine Temperaturmessung an einem der vier auf dem Tisch aufgespannten Werkstücke (204, 205, 206 oder 207) durchgeführt werden soll, fährt der Meßarm (209) zum Magazin (208) und legt dort den für das davorliegende Koordinatenmeßprogramm benötigten Taststift in einem freien Magazinplatz ab. Anschließend wird der Temperatursensor (201) im Zuge des automatischen Wechselvorganges aus dem Magazin entnommen und anstelle des abgelegten Taststifts in dem am unteren Ende des Meßarms (209) befestigten Tastkopf (211) gespannt.

Der Meßarm verfährt dann entsprechend dem programmierten Meßablauf mit dem Temperatursensor (201) zu dem Werkstück, dessen Temperatur gemessen werden soll, und legt die an der Unterseite des Sensors (201) befindliche ebene Kontaktplatte mit dem Temperaturmeßelement an eine der ebenen Flächen des Werkstücks an. Dieser Fall ist in der Fig. 4 dargestellt.

Damit das Meßelement die Temperatur des Werkstücks annehmen kann, muß der Kontakt zwischen Meßelement und Werkstück eine zeitlang aufrechterhalten werden. Diese Zeitdauer hängt von der Ansprechgeschwindigkeit des Meßelements, bzw. der Wärmekapazität der Kontaktplatte an der Unterseite des Sensors ab und kann durch Versuche vorbestimmt werden. Mit dem anhand von Fig. 2 beschriebenen Aufbau des Sensors lassen sich Kontaktzeiten von weniger als 6 Sekunden und eine Meßgenauigkeit für die Temperatur von 5/100 °C erzielen.

Die Temperaturmeßwerte werden dann von einer nicht näher dargestellten Einrichtung am Temperatursensor (201) drahtlos an eine entsprechende Gegenstelle (203) übermittelt, die mit der Steuerung des Koordinatenmeßgerätes verbunden ist. In diesem Zusammenhang soll erwähnt werden, daß es zweckmäßig ist, die Temperaturmeßwerte während des gesamten Vorgangs des Kontaktierens zu erfassen und abzuspeichern. Die verschiedenen Meßwerte können dann einer Plausibilitätskontrolle unterzogen werden, die eine Aussage darüber erlaubt, daß der Sensor tatsächlich mit dem Werkstück in Kontakt gekommen ist. Dies läßt sich in bekannter Weise beispielsweise dadurch erkennen, daß die Temperatur von einem vorher konstanten Wert, die der Lufttemperatur entspricht, während des Kontakts in Richtung auf einen etwas anderen Temperaturwert des Werkstücks konvergiert.

Nach Abschluß der Temperaturerfassung verfährt der Meßarm (209) wieder zum Magazin (208), wechselt dort den Temperatursensor (201) aus und danach den für das eigentliche Koordinatenmeßprogramm benötigten, passenden Taststift ein.

Alle danach mit Hilfe des Taststifts durchgeführten Koordinatenmessungen an dem Werkstück (204) werden dann mit Hilfe entsprechender Rechenprogramme so korrigiert, daß sie den Abmessungen des Werkstücks bei der Bezugstemperatur von 20° C entsprechen.

**Patentansprüche**

1.  Verfahren zur Erfassung der Temperatur von Meßobjekten auf Koordinatenmeßgeräten, dadurch gekennzeichnet, daß

    – der Meßarm (209) des Koordinatenmeßgerätes (200) mit dem daran befestigten Koordinatenmeßtaster (Taststift 21) zu einem am Rande des Meßbereichs aufgebauten Magazin (208) verfahren wird,

    – der Koordinatenmeßtaster (21) vom Meßarm (209) automatisch im Meßarm (209) automatisch und ein Temperatursensor (201) eingewechselt wird,

    – der anstelle des Koordinatenmeßtasters (21) am Meßarm (209) befestigte Temperatursensor (201) mit dem Meßobjekt (204-207) in Kontakt gebracht wird und der Kontakt während einer vorbestimmten Zeitspanne aufrechterhalten wird,

    – vom Temperatursensor (201) während des gesamten an Drucker: bitte nicht felt drucken Vorgangs des Kontaktierens, vor und während des Kontakts mit dem Meßobjekt (204-207) Temperaturmeßwerte ermittelt, dem Rechner des Koordinatenmeßgerätes übergeben und dort gespeichert werden,

    – anschließend der Temperatursensor (201) vom Meßarm (209) wieder zum Magazin (208) verfahren und dort gegen einen Koordinatenmeßtaster (21) ausgetauscht wird.

2.  Verfahren nach Anspruch 1, dadurch gekennzeichnet, daß die Temperaturmeßwerte zur automatischen Korrektur der mit dem Koordinatenmeßtaster (21) ermittelten Längenmeßwerte des Meßobjekts (204-207) verwendet werden.

3. Verfahren nach Anspruch 2, dadurch gekennzeichnet, daß die Temperaturmeßwerte vor der Korrektur der Längenmeßwerte einer Plausibilitätskontrolle unterzogen werden.

4. Temperatursensor zur Erfassung der Temperatur von Meßobjekten (204-207) auf Koordinatenmeßgeräten, dadurch gekennzeichnet, daß der Temperatursensor (1; 101) mit einer Halterung (6; 106) versehen ist, die in ihrer Form der Halterung (16) entspricht, den die auswechselbar am Koordinatenmeßgerät befestigten Koordinatenmeßtaster (21) besitzen und daß der Sensor an dieser Halterung gelenkig und das Meßelement des Sensors an dieser Halterung federnd befestigt ist.

5. Temperatursensor nach Anspruch 4, dadurch gekennzeichnet, daß der Temperatursensor (201) zusammen mit einem oder mehreren auswechselbaren Koordinatenmeßtastern (21) in einem am Rande des Meßbereichs des Koordinatenmeßgerätes (200) aufgebauten Magazin (208) ablegbar ist.

6. Temperatursensor nach Anspruch 4, dadurch gekennzeichnet, daß die Anschlußkabel (112) des Temperatursensors (101) mit Kontakten (114) an der Halterung (106) verbunden sind.

7. Temperatursensor nach Anspruch 4, dadurch gekennzeichnet, daß der Temperatursensor (1) über ein flexibles Kabel (12) direkt mit einer Auswerteelektronik des Koordinatenmeßgerätes verbunden ist.

8. Temperatursensor nach Anspruch 4, dadurch gekennzeichnet, daß eine Einrichtung (203) zur drahtlosen Übertragung der Temperaturmeßwerte des Temperatursensor (201) an das Koordinatenmeßgerät vorhanden ist.

## Claims

1. Method for detecting the temperature of an object to be measured on a coordinate measuring apparatus, characterized by the fact that
   – the movable measuring arm (209) of the coordinate measuring apparatus (200) with the coordinate measuring probe (probe pin 21) will be displaced to a magazine (208) disposed at the periphery of measuring range of the apparatus,
   – the coordinate measuring probe (21) will be dropped off in the magazine automatically by the measuring arm (209) and exchanged for a temperature sensor,
   – the temperature sensor connected to the measuring arm (209) instead of the coordinate measuring probe (21) will be engaged into contact with the object and the contact will be maintained for a predetermined time duration,
   – the measured values of temperature detected by the temperature sensor component during the complete contact procedure before and upon making contact with the object (204-207) to be measured will be transmitted to the computer of the coordinate measuring apparatus and stored there,
   – subsequently the temperature sensor (201) will be moved by the measuring arm (209) back to the magazine (208) and exchanged against a coordinate measuring probe (21).

2. The method of claim 1, characterized by the fact that the measured values of temperature are used for automatically correcting length measurement values of the measuring object (204-207) detected by said coordinate measuring probe.

3. The method of claim 2, characterized by the fact that the measured values of temperature are subjected to a plausibility check in advance of the correction of the length measurement values.

4. A temperature sensor for measuring the temperature of objects (204-207) to be measured in a coordinate measuring apparatus characterized by the fact that the temperature sensor (1; 101) is connected to a holder (6; 106) which has the same form as the holders (16) of the coordinate measuring probes (21) to be exchanged one for the other, and further characterized in that the sensor is pivotally connected to said holder and that the measuring element of the sensor is resiliently connected thereto.

5. The temperature sensor of claim 4, characterized.by the fact that the temperature sensor (201) and one or more coordinate measuring probes (21) are receivable in a magazine (208) disposed at the periphery of the measuring range of the coordinate measuring apparatus (200).

**6.** The temperature sensor component of claim 4, characterized by the fact that the connecting cable (112) of the temperature sensor (101) is connected with contact means (114) formed in the sensor holder (106).

**7.** The temperature sensor component of claim 4, characterized by the fact that the temperature sensor (1) is connected directly to the evaluation circuit of the coordinate measuring apparatus by a flexible cable (12).

**8.** The temperature sensor component of claim 4, characterized by means (203) for wirelessly transmitting the values of temperature measured by said temperature sensor (201) to said coordinate measuring apparatus.

**Revendications**

**1.** Procédé pour détecter la température d'objets à mesurer sur des appareils de mesure en coordonnées, caractérisé en ce qu'il comprend
– le déplacement du bras de mesure (209) de l'appareil de mesure en coordonnées (200) avec le palpeur de mesure en coordonnées (tige de palpage 21) fixé à ce bras, jusqu'à un magasin (208) érigé sur le bord de la sone de mesure,
– la dépose automatique du palpeur de mesure en coordonnées (21) par le bras de mesure (209) dans le magasin (208) et son remplacement par un capteur de température (201),
– la mise en contact du capteur de température (201), fixé à la place du palpeur de mesure (21) au bras de mesure (209), avec l'objet à mesurer (204-207) et le maintien du contact pendant un laps de temps préfixé,
– la détermination de valeurs de mesure de température par le capteur de température (201) pendant tout le processus de mise en contact, avant et pendant le contact avec l'objet à mesurer (204-207), la transmission de ces valeurs au calculateur de l'appareil de mesure en coordonnées et leur mémorisation par celui-ci et
– ensuite, le déplacement en retour du capteur de température (201) par le bras de mesure (209) jusqu'au magasin (208) et son remplacement, à ce magasin, par un palpeur de mesure en coordonnées (21).

**2.** Procédé selon la revendication 1, caractérisé en ce que les valeurs de mesure de température sont utilisées pour la correction automatise des valeurs de mesure de longueur de l'objet à mesurer (204-207), déterminées au moyen du palpeur de mesure en coordonnées (21).

**3.** Procédé selon la revendication 2, caractérisé en ce que les valeurs de mesure de température sont soumises à un contrôle de vraisemblance avant la correction des valeurs de mesure de longueur.

**4.** Capteur de température pour détecter la température d'objets à mesurer (204-207) sur des appareils de mesure en coordonnées, caractérisé en ce que le capteur de température (1; 101) est pourvu d'un support (6; 106) dont la forme correspond au support (16) que possèdent les palpeurs de mesure en coordonnées (21), fixés de façon interchangeable à l'appareil de mesure en coordonnées, et que le capteur est fixé de façon articulée à ce support et l'élément de mesure du capteur de température (1; 101) est fixé élastiquement à ce support.

**5.** Capteur de température selon la revendication 4, caractérisé en ce que le capteur de température (201) est susceptible d'être déposé ensemble avec un ou plusieurs palpeurs de mesure en coordonnées (21) interchangeables dans un magasin (208) érigé au bord de la sone de mesure de l'appareil de mesure en coordonnées (200).

**6.** Capteur de température selon la revendication 4, caractérisé en ce que les câbles de raccordement (112) du capteur de température (101) sont connectés à des contacts (114) sur le support (106).

**7.** Capteur de température selon la revendication 4, caractérisé en ce que le capteur de température (1) est relié directement par un câble flexible (12) à une électronique d'exploitation de l'appareil de mesure en coordonnées.

**8.** Capteur de température selon la revendication 4, caractérisé en ce qu'il est combiné à un dispositif (203) pour la transmussion sans fil des valeurs de mesure de température du capteur de température (201) à l'appareil de mesure en coordonnées.

# Fig.1

EP 0 364 669 B1

Fig. 2

Fig. 3a

Fig. 3b

Fig. 4